# EUROPEAN PATENT APPLICATION

(11) **EP 3 330 552 A1**
(43) Date of publication of application: **06.06.2018**
(21) Application number: 17201767.5
(22) Date of filing: 15.11.2017
(51) Int. Cl.: F16B 25/00

(54) **STRUCTURE OF SCREW**

(30) Priority: 02.12.2016 TW 105139894
(71) Applicant: Chao, Ying-Chin, Kaohsiung Hsien (TW)
(72) Inventor: Chao, Ying-Chin, Kaohsiung Hsien (TW)
(74) Representative: Horak, Michael

(57) **Abstract**

A structure of a screw is provided, including a shank (22) extending downward from a screw head (21). The shank (22) has an outer circumferential surface on which a thread (23) extending spirally around is formed. The shank has a lower end forming a tapering tail section (24). The thread does not extend into the tapering tail section. The tapering tail section is provided with at least one rib (25) raised on a surface thereof. The rib has an edge that is made in a wavy-toothed form (251) so as to improve the capability of the screw for cutting and chip removal and also to reduce a screw-in torque of a screwing operation of the screw to thereby achieve an effect of saving labor and time in conducting an operation and also to prevent the occurrence of defects of wood cracking.

## Description

### (a) Technical Field of the Invention

The present invention relates generally to a structure of a screw, and more particularly to a screw structure that improves cutting and chip removal capability of a screw and also helps reduce the magnitude of torque required for a screwing operation of the screw to thereby achieve an effect of saving labor and time for the operation, and also to help prevent cracking of wood to enhance quality of an operation conducted with the screw.

### (b) Description of the Prior Art

Wood screws are generally used in wooden work pieces for connection. The wood screws have a capability of drilling a hole in a wood material and at the same tapping the hole so as to allow for quick connection of the wooden work pieces.

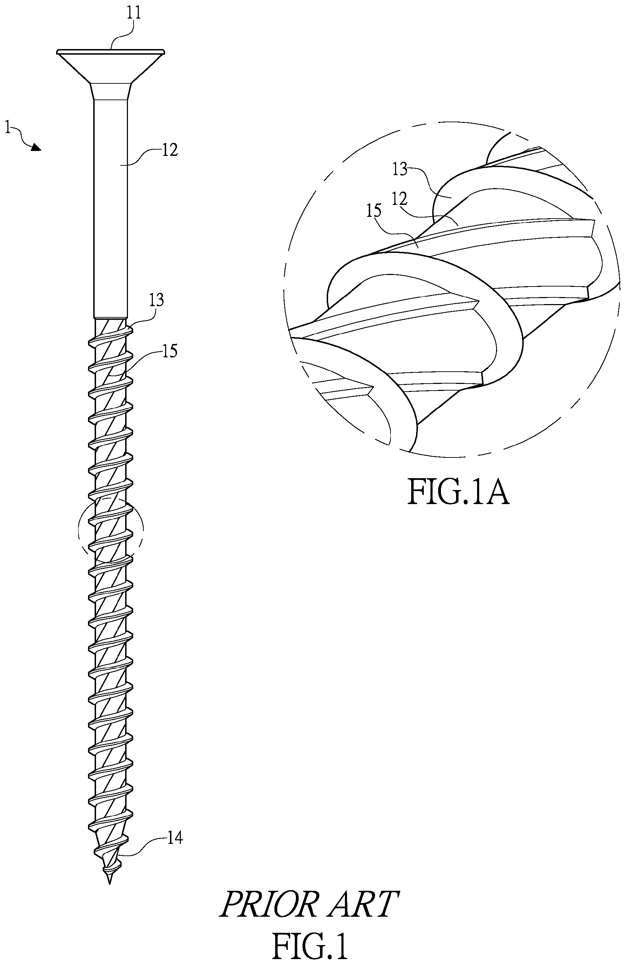

As shown in FIG. 1, a conventional screw 1 comprises a screw head 11 and a shank 12 extending downward from the screw head 11. The shank 12 has an outer circumferential surface on which an external thread 13 is formed in a spirally surrounding form. A lower end of the shank 12 forms a tapering tail section 14. To improve the capability of the screw 1 for wood cutting and chip removal, ribs 15 are formed as being raised from the circumferential surface of the shank 12 between turns of the thread 13 so that with such an arrangement of the ribs 15, the performance of the screw 1 in respect of cutting and chip removal is improved.

Although such a screw 1 is effective in improving the operation of the screw 1 in screwing and cutting, it is still a challenge of the screw manufacturers to provide a structure of a screw 1 that effectively protects a wooden work piece from cracking during an operation that the screw 1 is screwed, through drilling and cutting, into the wooden work piece and reduces a friction-induced torque in screwing and thus helps smoothly remove of wood chips.

### SUMMARY OF THE INVENTION

The primary objective of the present invention is to provide a solution that overcomes the shortcomings of the prior art that a wooden work piece may readily crack, due to excessive pressure applied thereto caused by the prior art screw, so as to damage the structural strength of the wooden work piece and a fastening effect desired to be achieved with the screw.

The technical solution that is adopted in the present invention to achieve the above objective is a structure of a screw, which comprises a shank extending downward from a screw head. The shank has an outer circumferential surface on which a thread extending spirally around is formed. The shank has a lower end forming a tapering tail section. The thread does not extend into the tapering tail section. The tapering tail section is provided with at least one rib raised on a surface thereof and the rib has an edge that is made in a wavy-toothed form.

An efficacy that the above-described technical solution of the present invention may achieve is that the tapering tail section of the screw is formed with at least one rib raised on a surface thereof and the rib has an edge that is made in a wavy-toothed form, in order to improve a cutting and chip removal capability of the screw and also to reduce a screw-in torque of a screwing operation of the screw to thereby achieve an effect of saving labor and time in conducting an operation, wherein the unique arrangement of the edge provides an effect of cutting, chipping, and destructing wood fibers and also prevents the occurrence of defects of wood cracking to enhance the quality of an operation conducted with the screw.

Another efficacy that the above-described technical solution of the present invention may achieve is that the rib can be alternatively made as a dot-form rib through arrangement of dot bumps, wherein the dots that form the dot-form rib can be of a circular arc form or a pyramidal form, wherein the unique arrangement of the edge provides an effect of cutting, chipping, and destructing wood fibers to thereby improve a cutting and chip removal capability of the screw and also to reduce a screw-in torque of a screwing operation of the screw and thus achieve an effect of saving labor and time in conducting an operation and also to prevent the occurrence of defects of wood cracking to enhance the quality of an operation conducted with the screw.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of a conventional screw.
FIG 2 is a perspective view of a screw according to the present invention.
FIG. 3 is an enlarged view of a portion of FIG. 2.
FIG 4 is a perspective view of a screw according to another embodiment of the present invention.
FIG. 5 is an enlarged view of a portion of FIG. 4.
FIG 6 is a perspective view of a screw according to a further embodiment of the present invention.
FIG. 7 is an enlarged view of a portion of FIG. 6.
FIG 8 is a perspective view of a screw according to yet a further embodiment of the present invention.
FIG. 9 is an enlarged view of a portion of FIG. 8.
FIG. 10 shows a first embodiment of a rib of the screw according to the present invention.
FIG. 11 shows a second embodiment of a rib of the screw according to the present invention.
FIG 12 shows a third embodiment of a rib of the screw according to the present invention.
FIG. 13 shows a fourth embodiment of a rib of the screw according to the present invention.
FIG. 14 shows a fifth embodiment of a rib of the screw according to the present invention.
FIG. 15 shows an embodiment of dot-form ribs of the screw according to the present invention.
FIG. 16 shows an embodiment of circular-dot-form ribs of the screw according to the present invention.
FIG. 17 shows an embodiment of pyramidal-dot-form ribs of the screw according to the present invention.
FIG. 18 shows a sixth embodiment of a rib of the screw according to the present invention.
FIG. 19 shows a seventh embodiment of a rib of the screw according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

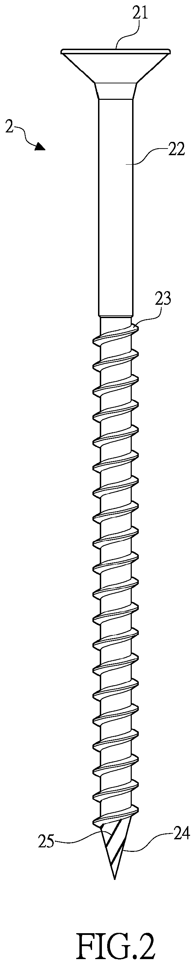

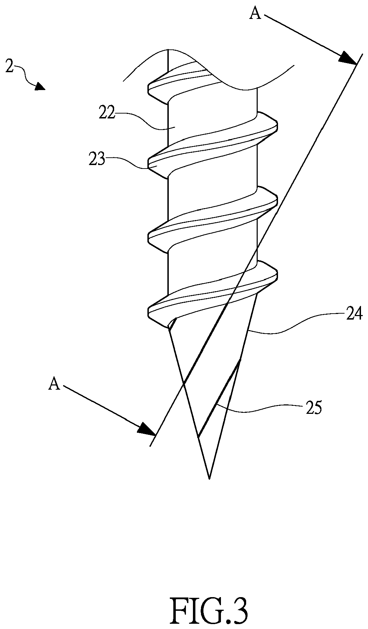

As shown in FIGS. 2 and 3, the present invention provides a screw 2, which comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 does not extend into the tapering tail section 24. The tapering tail section 24 is formed with at least one rib 25 raised on a surface thereof The rib 25 may be arranged to extend in a direction that is the same as or opposite to an extension direction of the thread 23, meaning the rib extends forwardly or backwardly of the extension direction of the thread, or can be alternatively arranged to extend in direction substantially parallel with a longitudinal axis of the shank 22. The rib 25 has an outside diameter that is smaller than an outside diameter of the thread 23.

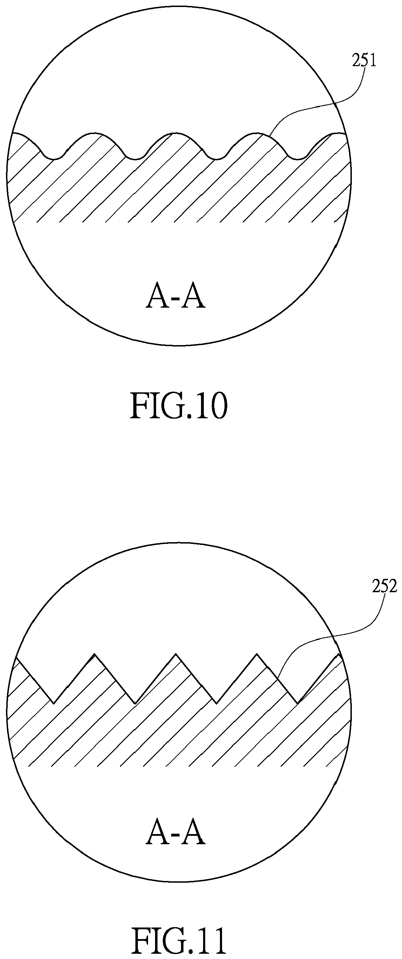

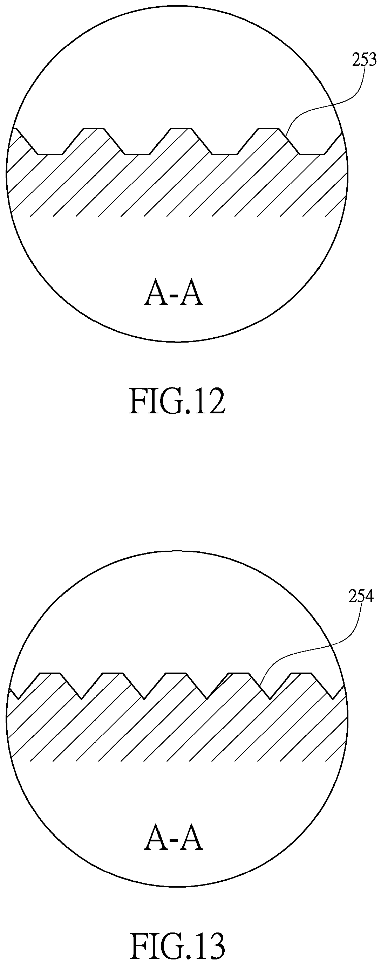

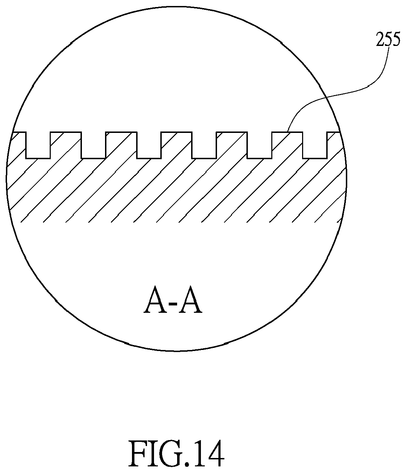

As shown in FIGS. 2, 3, 10, 11, 12,13, and 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination of the wavy-toothed form 251, the triangular-toothed form 252, the wedge-toothed form 253, the wedge-ridge-triangular-trough-toothed form 254, and the rectangular-toothed form 255, in order to improve a cutting and chip removal capability of the screw 2 and also to reduce a screw-in torque of a screwing operation of the screw 2, whereby the unique arrangement of the edge provides an effect of cutting, chipping, and destructing wood fibers to thereby achieve an effect of saving labor and time in conducting an operation and also to prevent the occurrence of defects of wood cracking to enhance the quality of an operation conducted with the screw 2.

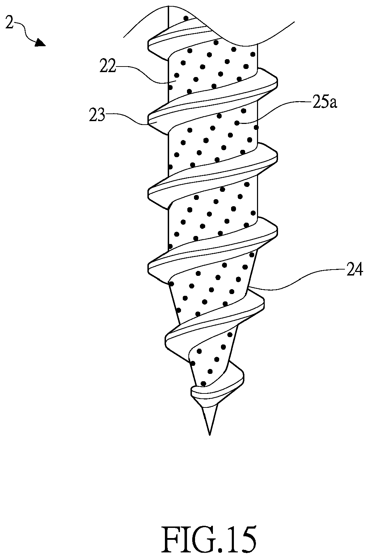

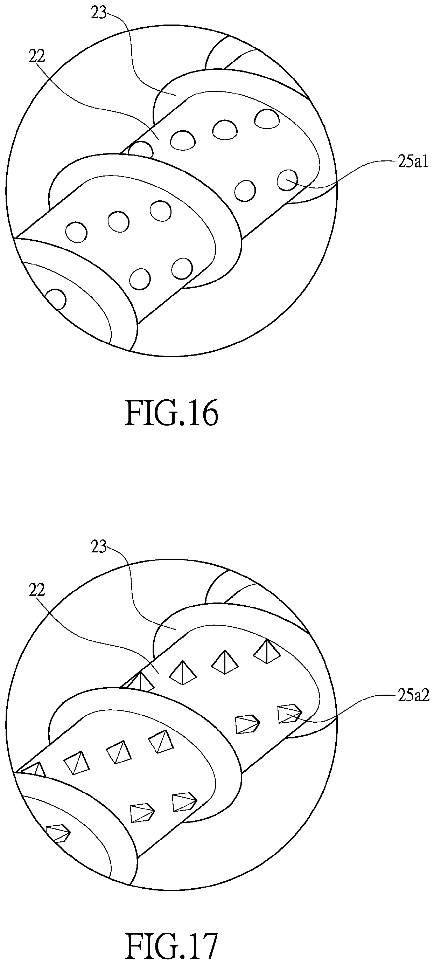

As shown in FIGS. 2, 3, 15, 16, and 17, the rib 25 can be made as a dot-form rib 25a through arrangement of dot bumps. The dots that form the dot-form rib 25a can be of a circular arc form 25a1 or a pyramidal form 25a2, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

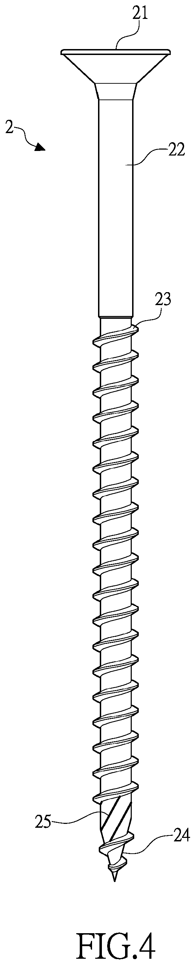

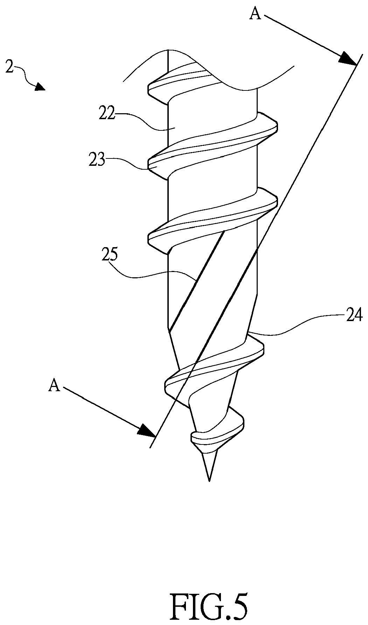

As shown in FIGS. 4 and 5, a screw 2 comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 extends into the tapering tail section 24. The shank 22 of the screw 2 is formed, at a portion thereof that is immediately next to the tapering tail section 24, with at least one rib 25 raised on a surface thereof The rib 25 may be arranged to extend in a direction that is the same as or opposite to an extension direction of the thread 23, or can be alternatively arranged to extend in direction substantially parallel with a longitudinal axis of the shank 22. The rib 25 has an outside diameter that is smaller than an outside diameter of the thread 23.

As shown in FIGS. 4, 5, 10, 11, 12,13, and 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination of the wavy-toothed form 251, the triangular-toothed form 252, the wedge-toothed form 253, the wedge-ridge-triangular-trough-toothed form 254, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

As shown in FIGS. 4, 5, 15, 16, and 17, the rib 25 can be made as a dot-form rib 25a through arrangement of dot bumps. The dots that form the dot-form rib 25a can be of a circular arc form 25a1 or a pyramidal form 25a2, in order to improve a cutting and chip removal capability of the screw 2 and also to reduce a screw-in torque of a screwing operation of the screw 2 to thereby achieve an effect of saving labor and time in conducting an operation and also to prevent the occurrence of defects of wood cracking to enhance the quality of an operation conducted with the screw 2.

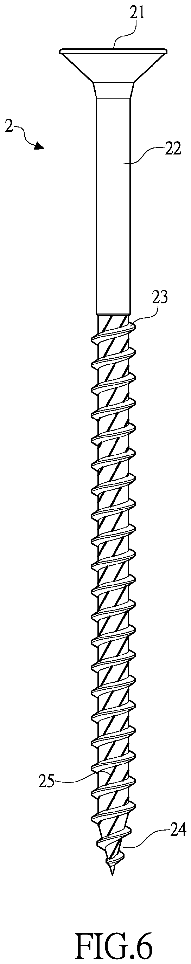

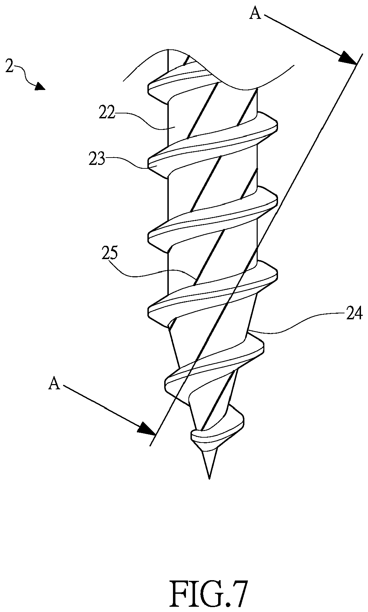

As shown in FIGS. 6 and 7, a screw 2 comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 extends into the tapering tail section 24. The shank 22 of the screw 2 is formed, at a portion thereof that comprises the thread 23 formed thereon, with at least one rib 25 raised on a surface thereof and located between one turn of the thread 23 and another turn of the thread 23. The rib 25 may be arranged to extend in a direction that is the same as or opposite to an extension direction of the thread 23, or can be alternatively arranged to extend in direction substantially parallel with a longitudinal axis of the shank 22. The rib 25 has an outside diameter that is smaller than an outside diameter of the thread 23.

As shown in FIGS. 6, 7, 10, 11, 12,13, and 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination of the wavy-toothed form 251, the triangular-toothed form 252, the wedge-toothed form 253, the wedge-ridge-triangular-trough-toothed form 254, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and wherein the unique arrangement of the edge provides an effect of cutting, chipping, and destructing wood fibers to thereby achieve an effect of saving labor and time in conducting an operation and also to prevent the occurrence of defects of wood cracking to enhance the quality of an operation conducted with the screw 2.

As shown in FIGS. 6, 7, 15, 16, and 17, the rib 25 can be made as a dot-form rib 25a through arrangement of dot bumps. The dots that form the dot-form rib 25a can be of a circular arc form 25a1 or a pyramidal form 25a2, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and wherein the unique arrangement of the edge provides an effect of cutting, chipping, and destructing wood fibers to thereby achieve an effect of saving labor and time in conducting an operation and also to prevent the occurrence of defects of wood cracking to enhance the quality of an operation conducted with the screw 2.

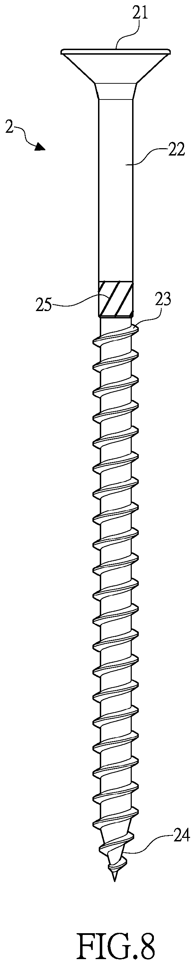

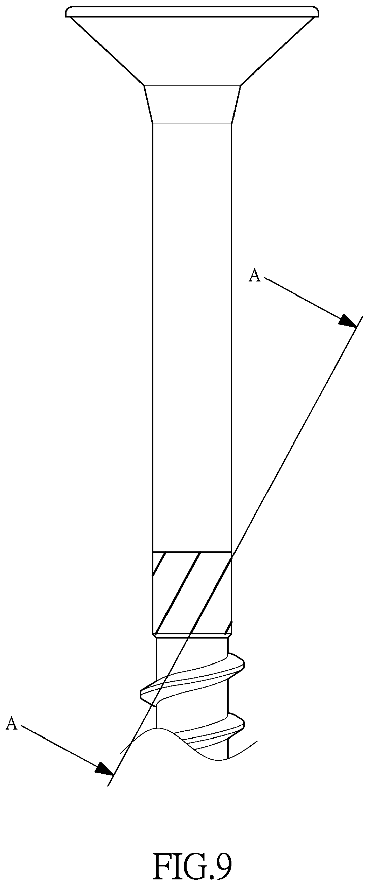

As shown in FIGS. 8 and 9, a screw 2 comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 extends into the tapering tail section 24. The shank 22 of the screw 2, which comprises the thread 23 formed thereon, is formed with at least one rib 25 at a location above the thread 23. The rib 25 may be arranged to extend in a direction that is the same as or opposite to an extension direction of the thread 23, or can be alternatively arranged to extend in direction substantially parallel with a longitudinal axis of the shank 22. The rib 25 has an outside diameter that is smaller than an outside diameter of the thread 23.

As shown in FIGS. 8, 9, 10, 11, 12,13, and 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination of the wavy-toothed form 251, the triangular-toothed form 252, the wedge-toothed form 253, the wedge-ridge-triangular-trough-toothed form 254, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

As shown in FIGS. 8, 9, 15, 16, and 17, the rib 25 can be made as a dot-form rib 25a through arrangement of dot bumps. The dots that form the dot-form rib 25a can be of a circular arc form 25a1 or a pyramidal form 25a2, wherein the unique arrangement of the edge provides an effect of cutting, chipping, and destructing wood fibers to thereby improve a cutting capability of the screw 2 and reduce the pressure that wood applies to the screw 2, and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

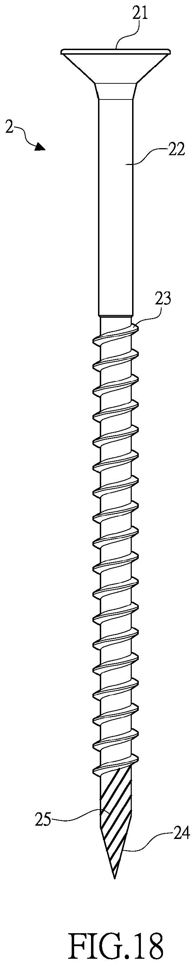

As shown in FIG 18, a screw 2 comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 does not extend into the tapering tail section 24. At least one rib 25 is provided from an end of the thread 23 to the tapering tail section 24. The ribs 25 extend from the thread 23 into the tapering tail section 24. The number of the ribs 25 of the thread 23 is the same as the number of the ribs 25 of the tapering tail section 24, wherein the number of the ribs is preferably between one and four. Further, the rib 25 has an outside diameter that must be smaller than an outside diameter of the thread 23. The outside diameter of the rib 25 can be a ratio of one of 3/4, 1/2, and 1/3 of the outside diameter of the thread 23 and can be determined according to the requirement for pulling force or other settings desired by a customer. Further, as a preferred embodiment, the rib 25 may have an inclination angle that is greater than an angle of the thread 23 (as shown in FIG. 18).

As shown in FIGS. 18, 10, 11, 12,13, and 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination or a single one of the wavy-toothed form 251, the triangular-toothed form 252, the wedge-toothed form 253, the wedge-ridge-triangular-trough-toothed form 254, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

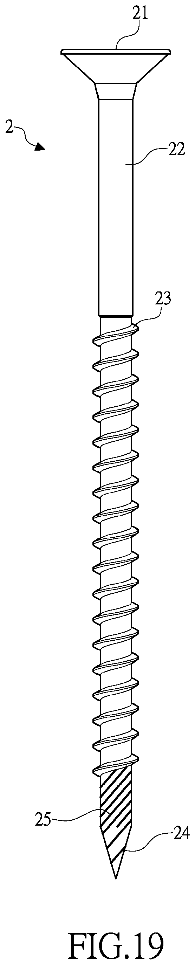

As shown in FIG. 19, a screw 2 comprises a screw head 21. A shank 22 extends downward from the screw head 21. The shank 22 has an outer circumferential surface on which a thread 23 is formed to extend spirally. The shank 22 has a lower end that is formed with a tapering tail section (or a sharp tip section) 24. The thread 23 does not extend into the tapering tail section 24. At least one rib 25 is provided from an end of the thread 23 to the tapering tail section 24. The ribs 25 extend from the thread 23 into the tapering tail section 24. The number of the ribs 25 that are arranged at a location adjacent to the thread 23 is greater than the number of the ribs 25 that are arranged on the tapering tail section 24, wherein in a preferred embodiment, the number of the ribs that are arranged at a location adjacent to the thread 23 is greater than the number of the ribs 25 that are arranged on the tapering tail section 24 by two to six. Further, the rib 25 has an outside diameter that must be smaller than an outside diameter of the thread 23. The outside diameter of the rib 25 can be a ratio of one of 3/4, 1/2, and 1/3 of the outside diameter of the thread 23 and can be determined according to the requirement for pulling force or other settings desired by a customer. Further, as a preferred embodiment, the rib 25 may have an inclination angle that is greater than an angle of the thread 23 (as shown in FIG 19). Further, the rib 25 may be arranged to extend in a direction that is the same as or opposite to an extension direction of the thread 23, or can be alternatively arranged to extend in direction substantially parallel with a longitudinal axis of the shank 22.

As shown in FIGS. 19, 10, 11, 12, 13, 14, the rib 25 has an edge that is made in a corrugated form as one of a wavy-toothed form 251, a triangular-toothed form 252, a wedge-toothed form 253, a wedge-ridge-triangular-trough-toothed form (or top-truncated triangular-toothed form) 254, and a rectangular-toothed form 255. In an embodiment, the edge of the rib 25 can be made in a configuration that is formed as one of various combination or a single one of the wavy-toothed form 251, the triangular-toothed form 252, the wedge-toothed form 253, the wedge-ridge-triangular-trough-toothed form 254, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

An efficacy of the present invention is that a tapering tail section 24 of a screw 2 is formed with at least one rib 25 raised on a surface thereof and the rib 25 has an edge that is made in a wavy-toothed form 251, a triangular-toothed form 252, a wedge-toothed form 253, a wedge-ridge-triangular-trough-toothed form 254, or a rectangular-toothed form 255, wherein the unique arrangement of the edge provides an effect of cutting, chipping, and destructing wood fibers to thereby improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

Another efficacy of the present invention is that the rib 25 can be alternatively made as a dot-form rib 25a through arrangement of dot bumps, wherein the dots that form the dot-form rib 25a can be of a circular arc form 25a1 or a pyramidal form 25a2 in order to improve a cutting and chip removal capability of the screw 2 and also to reduce a screw-in torque of a screwing operation of the screw 2 and thus achieve an effect of saving labor and time in conducting an operation and also to prevent the occurrence of defects of wood cracking to enhance the quality of an operation conducted with the screw 2.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A screw (2), comprising a screw head (21), a shank (22) extending downward from the screw head (21), the shank (22) having an outer circumferential surface on which a thread (23) is formed to extend spirally, the shank (22) having a lower end that is formed with a tapering tail section (24), wherein the thread (23) is not extended into the tapering tail section (24), **characterized in that** the tapering tail section (24) is formed with at least one rib (25) and the rib (25) has an edge that is made in a wavy-toothed form (251).

2. A screw (2), comprising a screw head (21), a shank (22) extending downward from the screw head (21), the shank (22) having an outer circumferential surface on which a thread (23) is formed to extend spirally, the shank (22) having a lower end that is formed with a tapering tail section (24), wherein the thread (23) is extended into the tapering tail section (24), **characterized in that** the shank (22) of the screw (2) is formed, at a portion thereof that is immediately next to the tapering tail section (24), with at least one rib (25) and the rib (25) has an edge that is made in a wavy-toothed form (251).

3. A screw (2), comprising a screw head (21), a shank (22) extending downward from the screw head (21), the shank (22) having an outer circumferential surface on which a thread (23) is formed to extend spirally, the shank (22) having a lower end that is formed with a tapering tail section (24), wherein the thread (23) is extended into the tapering tail section (24), **characterized in that** the shank (22) of the screw (2) is formed, at a portion thereof that comprises the thread (23) formed thereon, with at least one rib (25) located between one turn of the thread (23) and another turn of the thread (23) and the rib (25) has an edge that is made in a wavy-toothed form (251).

4. A screw (2), comprising a screw head (21), a shank (22) extending downward from the screw head (21), the shank (22) having an outer circumferential surface on which a thread (23) is formed to extend spirally, the shank (22) having a lower end that is formed with a tapering tail section (24), wherein the thread (23) is extended into the tapering tail section (24), **characterized in that** the shank (22) of the screw (2) is formed, at a portion that is located above the thread (23), with at least one rib (25) and the rib (25) has an edge that is made in a wavy-toothed form (251).

5. The screw according to any one of claims 1-4, wherein the edge of the rib (25) is made in a triangular-toothed form (252).

6. The screw according to any one of claims 1-4, wherein the edge of the rib (25) is made in a wedge-toothed form (253).

7. The screw according to any one of claims 1-4, wherein the edge of the rib (25) is made in a wedge-ridge-triangular-trough-toothed form (254).

8. The screw according to any one of claims 1-4, wherein the edge of the rib (25) is made in a rectangular-toothed form (255).

9. The screw according to any one of claims 1-4, wherein the rib is made as a dot-form rib (25a) through arrangement of dot bumps.

10. The screw according to claim 9, wherein the dots of the dot-form rib (25a) are of a circular arc form.

11. The screw according to claim 9, wherein the dots of the dot-form rib (25a) are of a pyramidal form.

12. The screw according to any one of claims 1-4, wherein the edge of the rib (25) extends forwardly of an extension direction of the thread (23) or backwardly of the extension direction of the thread (23), or is alternatively oriented parallel to a longitudinal axis of the shank (22).

13. The screw according to any one of claims 1-4, wherein the edge of the rib (25) is made in a configuration that is formed as one of multiple combinations of a wavy-toothed form (251), a triangular-toothed form (252), a wedge-toothed form (253), a wedge-ridge-triangular-trough-toothed form (254), and a rectangular-toothed form (255).

14. A screw (2), comprising a screw head (21), a shank (22) extending downward from the screw head (21), the shank (22) having an outer circumferential surface on which a thread (23) is formed to extend spirally, the shank (22) having a lower end that is formed with a tapering tail section (24), wherein the thread (23) is not extended into the tapering tail section (24), **characterized in that** the thread (23) is not extended into the tapering tail section (24); at least one rib (25) is provided from an end of the thread (23) to the tapering tail section (24); and the rib (25) has an edge that is made in a wavy-toothed form (251).

15. The screw according to claim 14, wherein at least one rib (25) is formed, as being raised, to extend from an end of the thread (23) to the tapering tail section (24) and the ribs (25) that are adjacent to the end of the thread (23) corresponds in number to the ribs (25) provided on the tapering tail section (24).

16. The screw according to claim 14, wherein at least one rib (25) is formed, as being raised, to extend from an end of the thread (23) to the tapering tail section (24) and the ribs (25) that are adjacent to the end of the thread (23) outnumber the ribs (25) provided on the tapering tail section (24).

17. The screw according to claim 16, wherein the ribs (25) that are adjacent to the end of the thread (23) outnumbers the ribs (25) provided on the tapering tail section (24) by a number of 2 to 6.

18. The screw according to any one of claims 14-16, wherein the edge of the rib (25) is made in a configuration that is formed as one of multiple combinations of a wavy-toothed form (251), a triangular-toothed form (252), a wedge-toothed form (253), a wedge-ridge-triangular-trough-toothed form (254), and a rectangular-toothed form (255).

19. The screw according to any one of claims 1-4, 14, and 15, wherein at least one rib (25) is provided from an end of the thread (23) to the tapering tail section (24) and the rib (25) provided on the tapering tail section (24) has an inclination angle that is greater than an angle of the thread (23).

20. The screw according to any one of claims 1-4, 14, and 15, wherein the rib (25) has an outside diameter that is smaller than an outside diameter of the thread (23).

21. The screw according to any one of claims 14, 15, and 16, wherein the rib (25) extends forwardly of an extension direction of the thread (23) or backwardly of the extension direction of the thread (23), or is alternatively oriented parallel to a longitudinal axis of the shank (22).
